# EUROPÄISCHE PATENTANMELDUNG

(11) **EP 2 573 548 A1**
(43) Veröffentlichungstag der Anmeldung: **27.03.2013**
(21) Anmeldenummer: 11182045.2
(22) Anmeldetag: 20.09.2011
(51) Int. Cl.: G01N 21/77

(54) **Optochemischer Sensor**

(71) Anmelder: Mettler-Toledo AG, 8606 Greifensee (CH)
(72) Erfinder: Radanovic, Dragan, 8620 Wetzikon (CH); Venturini, Francesca, 8600 Dübendorf (CH)

(57) **Zusammenfassung**

Optochemischer Sensor zur Messung mindestens eines chemischen oder physikalischen Parameters eines Messmediums, umfassend ein Sensorgehäuse, ein Messelement (15), eine Messanordnung (10) und eine Abdeckkappe(6), die die Messanordnung gegen das Messmedium abdichtet und mediumsseitig ein Fenster aufweist, auf dem das Messelement (15) angeordnet ist. Die Abdeckkappe (6) und insbesondere das Fenster bestehen im Wesentlichen aus einem Material, wie Glas oder einem Kunststoff, welches zumindest für optische und/oder elektrische Signale sowie für die Messsignale durchlässig ist.

## Beschreibung

Die vorliegende Erfindung bezieht sich auf einen optochemischen Sensor mit einer Messanordnung und einem optischen Element, welches zumindest die Messanordnung gegen ein Messmedium abdichtet.

Optochemische Sensoren werden sowohl im Labor als auch im Prozess zur Bestimmung von unterschiedlichsten Analyten eingesetzt. Im Prozess können beispielsweise optochemische Sensoren, welche auf dem Prinzip der Fluoreszenzlöschung beruhen, zur Bestimmung von in einem Fluid gelösten Gasen, wie zum Beispiel Sauerstoff, Ozon oder Kohlendioxid eingesetzt werden. Hierzu weist der Sensor ein sensitives Element mit einem Signalstoff auf, welcher mit dem Analyten wechselwirken kann. Bei der Fluoreszenzlöschung werden die Moleküle des Signalstoffs durch Bestrahlung mit Licht einer geeigneten Wellenlänge angeregt. Die angeregten Moleküle geben dann bei der Rückkehr in den Grundzustand die aufgenommene Energie in Form von Fluoreszenz wieder ab, welche durch Wechselwirkung mit dem Analyten gelöscht wird. Für die Detektion der Fluoreszenzlöschung ist es wichtig, dass diese eine ausreichende Intensität oder Energie aufweist, welche im Zusammenhang mit der eingestrahlten Strahlungsintensität steht.

Prinzipiell können mit dem Prinzip der Fluoreszenzlöschung auch eine Vielzahl anderer Analyten in einem fluiden Messmedium bestimmt werden, solange der Signalstoff, beispielsweise ein Fluorophor, sensitiv in Bezug auf den gewünschten Analyten ist. Der Begriff "Fluid" umfasst hier sowohl Flüssigkeiten, Gase sowie Mischungen daraus.

Es sind verschiedene auf dem Prinzip der Fluoreszenz oder Fluoreszenzlöschung basierende optochemische Sensoren bekannt. Diesen gemeinsam ist, dass sie ein Messelement mit einem Fluorophor aufweisen, welches im Betrieb mit dem Messmedium in Kontakt gebracht werden kann, und welches mit Strahlung einer geeigneten Wellenlänge beaufschlagt werden kann. Bekannt sind Sensoren bei denen das Messelement von hinten oder von der Seite mit Strahlung beaufschlagt wird. Weitere Anforderungen ergeben sich auf Grund der Einsatzgebiete der Sensoren, insbesondere beim Einsatz in biologischen, biochemischen, pharmazeutischen oder lebensmittetechnischen Prozessen. Zu diesen Anforderungen zählt neben einem hygienischem Sensordesign, insbesondere die Dichtigkeit des Sensors, also dass weder Messmedium in den Sensor eindringen kann, noch von aussen Stoffe durch den Sensor in das Messmedium eindringen können. Vorzugsweise sollte der Sensor daher mediums- und/oder gasdicht sein. Selbstverständlich sollte auch das Messelement so mit dem Sensor verbunden sein, dass es sich nicht ganz oder teilweise vom Sensor lösen und so beispielsweise in das Messmedium fallen kann.

Diese Anforderungen werden von den bekannten Sensoren häufig nicht vollständig erfüllt. Nachteilig an vielen der bekannten Sensoren ist, dass gerade bei längerem Gebrauch die Abdichtung des Innenraums gegenüber dem Messmedium nachlässt und durchlässig werden kann. Dieses kann beispielsweise durch Sterilisierungs- und/oder Reinigungs-Methoden verursacht werden, welche in biologischen, biochemischen, pharmazeutischen oder lebensmitteltechnischen Prozessen regelmässig unter anderem zur Desinfektion verwendet werden und welche die Abdichtung angreifen und beschädigen können. Zudem kann es insbesondere im Bereich der Dichtung zur Spaltbildung kommen und es können sich Substanzen daran ablagern, insbesondere, da die Messelemente häufig nur auf im Sensor angeordneten Hülsen aus einem vom Messelement abweichenden Material aufgebracht oder aufklebt sind. Es sind sogar Sensoren bekannt, bei welchen das Messelement derart angeordnet ist, dass ein vollständiges Ablösen vom Sensor und damit eine Kontamination des Messmediums möglich ist. Dieses ist insbesondere beim Einsatz in biologischen, biochemischen, pharmazeutischen oder lebensmitteltechnischen Prozessen unerwünscht, da so der Sensor kontaminiert werden kann, beispielsweise indem in den Innenraum des Sensors eindringendes Messmedium die Funktionsfähigkeit des Sensors herabsetzt oder diesen sogar zerstört. Zudem kann es durch Stoffe, wie auch Luftsauerstoff, die von aussen durch den Sensor ins Messmedium eindringen zu einer Kontamination des Messmediums und/oder eines nachfolgenden Prozesses kommen.

Daraus ergibt sich als Aufgabe die Bereitstellung eines optochemischen Sensors mit einer verbesserten Abdichtung des Innenraums.

Gelöst wird diese Aufgabe durch einen optochemischen Sensor zur Messung mindestens eines chemischen oder physikalischen Parameters eines Messmediums mit einem Sensorgehäuse, einem Messelement und einer Messanordnung. Die Messanordnung ist im Sensorgehäuse angeordnet und umfasst Mittel zur Bereitstellung optischer und/oder elektrischer Signale und Mittel zum Sammeln und/oder Übertragen von Messsignalen, wobei die Messsignale aus der direkten oder indirekten Wechselwirkung der optischen und/oder elektrischen Signale mit dem Messmedium resultieren. Ferner umfasst der optochemische Sensor eine Abdeckkappe. Die Abdeckkappe dichtet die Messanordnung gegen das Messmedium ab und weist mediumsseitig ein Fenster auf. Das Messelement ist mediumsseitig auf dem Fenster angeordnet und steht im Betrieb in direktem Kontakt mit dem Messmedium. Die Abdeckkappe und insbesondere das Fenster bestehen im Wesentlichen aus einem Material, wie Glas oder einem Kunststoff, welches zumindest für die optischen und/oder elektrischen Signale sowie für die Messsignale durchlässig ist.

Die bereitgestellten optischen und/oder elektrischen Signale können insbesondere Licht oder Strahlung sein. Die Wellenlänge des Lichts oder der Strahlung wird vor allem auf Grund des eingesetzten Messelements gewählt.

Vorteilhaft an der Verwendung einer Abdeckkappe ist, dass diese einen spaltfreien und somit mediumsdichten Abschluss zwischen Messanordnung und Messmedium herstellen kann, welcher insbesondere auf Grund des in der Abdeckkappe vorhandenen Fensters trotzdem durchlässig für die optischen und/oder elektrischen Signale sowie für die Messsignale ist.

Die Abdeckkappe kann aus einem Material, wie Glas oder Kunststoff, bestehen, welches zumindest für die optischen und/oder elektrischen Signale sowie für die Messsignale durchlässig ist. Beispiele für derartige Kunststoffe stellen u.a. Polycarbonate, Cyclo-Olefin-Copolymere, Polymethylmethacrylate oder Polymethacrylmethylimide dar. Durch die Verwendung eines durchlässigen Materials kann auf eine Öffnung in der Abdeckkappe verzichtet werden, wodurch es möglich wird die Dichtigkeit trotz agressiver Reinigungs- oder Prozess-Bedienungen zu erhalten.

Die Verwendung von Glas als Material für die Abdeckkappe und insbesondere für das Fenster ist besonders vorteilhaft, wenn auch das Substrat des Messelements aus Glas besteht, da eine Verbindung zwischen zwei Glaselementen einfach herstellbar ist. Damit auch wenn die Abdeckkappe eine Öffnung aufweist, kann die Verbindung so hergestellt werden, dass dicht ist und bleibt. Eine haltbare, mediums- und/oder gasdichte Glas-Glas-Verbindung kann beispielsweise durch Kleben mit bekannten Glasklebern erreicht werden. Auf diese Weise können möglicherweise zwischen den Elementen entstehende Spannungen vermieden werden, wodurch auch die Messleistung verbessert werden kann. Solche Kleber sind im Gebrauch korrosionsbeständiger, wodurch die Dichtigkeit länger erhalten bleibt und der Sensor weniger driftet, also länger korrekte Messergebnisse anzeigt.

Weiterhin ist die Verwendung von Glas auch für die Herstellung der Abdeckkappe und insbesondere des Fensters vorteilhaft. Das Messelement kann beispielsweise direkt auf ein geeignetes Glaselement aufgebracht werden, zum Beispiel durch Beschichten. Anschliessend kann aus dem einseitig beschichteten Glaselement die Abdeckkappe gefertigt werden. Dazu können Methoden wie beispielsweise Laserschneiden oder Bohren angewendet werden, so dass eine Abdeckkappe mit bereits aufgetragenem Messelement entsteht.

Vorzugsweise ist das Messelement auf dem Fenster der Abdeckkappe angeordnet. Das Messelement kann je nach Ausgestaltung entweder mittels eines geeigneten Befestigungsmittels, wie beispielsweise Kleben, oder durch thermische Behandlung auf dem Fenster befestigt werden. Weiterhin könnte das Messelement durch Verfahren wie beispielsweise Spin Coating direkt auf dem Fenster aufgebracht werden.

Die Abdeckkappe kann zudem mediumsseitig einen Träger für das Messelement umfassen. Das Messelement kann in diesen Träger eingesetzt werden und so direkt mit den von der Messanordnung bereitgestellten optischen und/oder elektrischen Signalen wechselwirken. Das Messelement kann fest oder lösbar mit dem Träger verbunden werden. Weiterhin ermöglicht diese Ausgestaltung die Ausnutzung eines möglichst grossen Anteils des Messelements zur Wechselwirkung mit den bereitgestellten Signalen. Gerade beim Einsatz von Fluoreszenzlöschungsverfahren sorgt ein grösserer verwendeter Querschnitt des Messelements für verbesserte Messsignale und eine erhöhte Performance des Sensors.

Das Messelement umfasst vorzugsweise eine Polymerschicht, in welcher ein Fluorophor gelöst ist. Im Betrieb steht das Messmedium direkt mit dem Messelement in Kontakt. Die Wahl des Materials für die Polymerschicht sowie des Fluorophors wird einerseits durch die Wahl des mindestens einen Messparameters bestimmt und andererseits durch die chemischen und physikalischen Eigenschaften des messbereiten Messelements. Gerade in biochemischen oder nahrungsmittel technischen Prozessen unterliegen alle mit dem Messmedium in Kontakt kommenden Stoffe strengen Vorlagen, u. a. in Bezug auf Toxizität und Löslichkeit im Messmedium. Insbesondere bei Verwendung von Fluorophor enthaltenen Messelemente werden durch die Messanordung insbesondere optische Signale bereitgestellt.

In einer Ausführung kann das Fenster der Abdeckkappe mindestens eine polierte Oberfläche aufweisen. Weiterhin kann das Fenster mindestens eine unpolierte oder angeraute Seite aufweisen. Durch die Behandlung mindestens einer Oberfläche, mit welcher z.B. die Rauigkeit verändert wird, können die optischen Eigenschaften des Fensters beeinflusst werden.

Die Abdeckkappe kann einstückig ausgebildet sein oder aus mehreren Teilen bestehen, welche fest miteinander verbunden sind und eine Einheit darstellen, so dass eine ungewünschte Spaltbildung im Wesentlichen verhindert werden kann. Vorzugsweise ist die Abdeckkappe einstückig ausgestaltet, da so keine Spalte zwischen den einzelnen Teilen existieren und die Abdeckkappe insbesondere mediumsdicht und/oder gasdicht ist.

Zusätzlich zur Durchlässigkeit für die bereitgestellten Signale und die Messsignale kann das Fenster der Abdeckkappe zudem als Linse oder Filter ausgestaltet oder wenigstens einseitig beschichtet sein. Mit einer Linse ist es beispielsweise möglich die bereitgestellten Signale in das Messmedium und/oder die Messsignale in das Innere des Sensors zu fokussieren. Je nach Ausgestaltung des Fensters können so die Signale auf einen bestimmten Punkt fokussiert oder der Signalstrom auf eine bestimmte Fläche aufgeweitet werden.

Die Ausgestaltung als Filter ist vorteilhaft, da das Fenster und somit die Abdeckkappe selbst eine optische Komponente darstellt und beispielsweise die bereitgestellten optischen oder elektrischen Signale und/oder die Messsignale filtern kann. Weiterhin kann so auf ein separates Filter verzichtet werden, wodurch der optochemische Sensor mit weniger Bauteilen und somit kompakter, stabiler und/oder günstiger hergestellt werden kann. Auf diese Weise können Filter eingesetzt werden, die beispielsweise Teile der bereitgestellten Signale und/oder die Messsignale filtern. Die Filter können beispielsweise als Kantenfilter, Bandpassfilter, Diffusionsfilter oder weitere bekannte Filterarten ausgestaltet sein.

Weiterhin kann das Fenster auch auf mindestens einer Seite beschichtet sein, wobei die Beschichtung, vorzugsweise eine funktionelle Beschichtung ist, welche beispielsweise als Messelement und/oder als Filter wirken kann oder einen Schutz des Fensters darstellen kann, indem es beispielsweise dieses härtet oder eine Oberfläche zur Verfügung stellt, welche eine Kontamination durch Anlagerung von Bestandteilen des Messmediums vermindert oder sogar verhindert.

Selbstverständlich kann das Fenster auch mehrere der genannten Funktionalitäten gleichzeitig aufweisen, also als Linse und/oder Filter wirken und/oder eine Beschichtung aufweisen.

Der optochemische Sensor ist vorzugsweise derart ausgestaltet, dass die Abdeckkappe austauschbar und mittels einer Überwurfhülse am Sensorgehäuse befestigt ist. Diese Ausgestaltung ist vorteilhaft, wenn das Fenster der Abdeckkappe als Messelement ausgestaltet ist oder das Messelement darauf angeordnet ist, da beispielsweise optochemische Messelemente, welche ein Fluorophor enthalten, altern und so einfach ausgetauscht werden können.

Die Überwurfhülse kann an ihrem mediumsseitigen Ende einen nach innen gerichteten Absatz umfassen, welcher die Abdeckkappe sichert. Dieses ist vor allem im Betrieb des Sensors vorteilhaft, da so verhindert werden kann, dass die Abdeckkappe in das Messemedium fällt und dieses oder ein entstehendes Produkt kontaminiert oder umständlich am Prozessende aus dem Produkt entfernt werden muss.

Der optochemische Sensor kann ein erstes Dichtmittel umfassen, welches zwischen der Überwurfhülse und dem Gehäuse angeordnet ist. Weiterhin kann der optochemische Sensor ein zweites Dichtmittel umfassen, welches zwischen dem optischen Element und der Messanordnung angeordnet ist. Das erste und/oder das zweite Dichtmittel dienen dazu ein Eindringen von Messmedium in das Innere des optochemischen Sensors im Betrieb zu verhindern.

Die Messanordnung umfasst zumindest Mittel zu Bereitstellung optischer und/oder elektrischer Signale sowie Mittel zum Sammeln und/oder Übertragen von Messsignalen. Das Mittel zur Bereitstellung optischer und/oder elektrischer Signale kann beispielsweise eine Elektronen oder Strahlungsquelle, wie eine Laserdiode, ein Nernststift oder eine andere in der Spektroskopie gebräuchliche Strahlungsquelle umfassen.

Das Mittel zum Sammeln und/oder Übertragen von Messsignalen kann einen Detektor, wie beispielsweise einen Photodetektor, eine Photodiode, einen CMOS-Sensor, CCD-Sensoren, Photomultiplier oder weitere dem Fachmann bekannte Detektoren umfassen.

Ferner können das Mittel zur Bereitstellung optischer und/oder elektrischer Signale und/oder das Mittel zum Sammeln und/oder Übertragen von Messsignalen mindestens einen Wellenleiter oder Lichtwellenleiter mit einer oder mehreren Fasern umfassen, welcher dazu dient die bereitgestellten Signale zum Messelement und/oder Messmedium zu leiten und/oder die durch Interaktion mit dem Messmedium und/oder dem Messelement entstehenden Messsignale zu einem geeigneten Detektor zu leiten.

Weiterhin können das Mittel zur Bereitstellung optischer und/oder elektrischer Signale und/oder das Mittel zum Sammeln und/oder Übertragen von Messsignalen Elemente zum Umlenken und/oder Fokussieren der Signale aufweisen, wie zum Beispiel Spiegel, Linsen oder Strahlteiler.

Die Abdeckkappe kann, je nach Ausgestaltung, sowohl in einem optochemischen Sensor wie auch in einem optischen Sensor verwendet werden, wie beispielsweise einem Trübungsensor, der ebenfalls ein für die bereitgestellten Signale und/oder die Messsignale durchlässiges Fenster benötigt.

Verschiedene Ausführungsvarianten eines erfindungsgemässen optochemischen Sensors werden anhand der folgenden Figuren näher beschrieben, wobei gleiche Elemente mit denselben Bezugszeichen versehen sind. Zur besseren Übersicht sind die Figuren zumindest teilweise nicht massstabsgetreu dargestellt. Es zeigen:
- Fig. 1: Eine dreidimensionale Explosionsdarstellung eines erfindungsgemässen optochemischen Sensors;
- Fig. 2: einen optochemischen Sensor im Schnitt, wobei der Sensorkopf nur zum Teil gezeigt ist;
- Fig. 3: eine Vergrösserung des mediumsseitigen Endes des optochemischen Sensors aus Figur 2 im Schnitt;
- Fig. 4: eine vereinfachte Darstellung einer Ausgestaltung einer Abdeckkappe, eines Messelements und einer Überwurfhülse im Schnitt;
- Fig. 5: eine vereinfachte Darstellung einer weiteren Ausgestaltung einer Abdeckkappe mit einer Aussparung als Träger für ein Messelement im Schnitt;
- Fig. 6: eine vereinfachte Darstellung einer weiteren Ausgestaltung einer Abdeckkappe mit einem mediumsseitig beschichteten Fenster im Schnitt;
- Fig. 7: eine vereinfachte Darstellung einer weiteren Ausgestaltung einer Abdeckkappe mit einem als Konvexlinse ausgestalteten Fenster und einem Messelement im Schnitt;
- Fig. 8: eine vereinfachte Darstellung einer weiteren Ausgestaltung einer Abdeckkappe mit einem als Konvexlinse ausgestaltetem Fenster, welches eine Messschicht und eine weitere Beschichtung aufweist;

- Fig. 9: eine vereinfachte Darstellung einer weiteren Ausgestaltung einer Abdeckkappe mit einem als Konkavlinse ausgestaltetem Fenster im Schnitt.

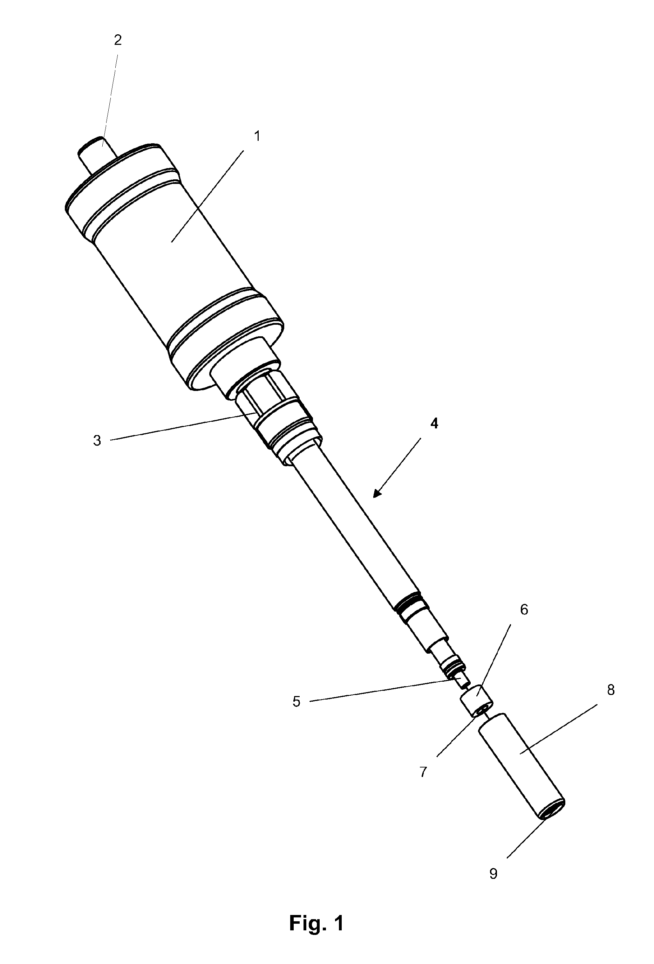

Figur 1 zeigt eine dreidimensionale Darstellung eines erfindungsgemässen optochemischen Sensors mit einem mehrteiligen Sensorgehäuse. Der Sensor weist einen Sensorkopf 1 mit einem Anschluss 2 auf über den der Sensor an eine Anzeige, ein Prozessleitsystem, einen Transmitter oder an vergleichbare Geräte angeschlossen werden kann. Der Sensorkopf 1 kann, wie hier gezeigt, über ein geeignetes Befestigungselement 3, hier eine Schraubbefestigung, mit einem Tauchrohr 4 verbunden werden, welches im Betrieb des Sensors zumindest teilweise in ein Messemedium eingetaucht werden kann. Am freien oder mediumsseitigen Ende des Tauchrohrs 4 ist in dieser Explosionsdarstellung ein Ende eines im Tauchrohr 4 angeordneten Wellenleiters 5 zu erkennen. Mit 'mediumsseitig' wird die Seite oder Teile des Sensors bezeichnet, welche im Betrieb ins Medium hineinragen oder diesem zugewandt sind und mit 'mediumsabgewandt' entsprechend die vom Messmedium entfernten Teile des Sensors. Im Betrieb des Sensors ist das mediumsseitige Ende des Wellenleiters 5 durch eine Abdeckkappe 6 bedeckt, welche mediumsseitig durch ein Fenster 7 gegen das Messmedium geschützt ist. Die Abdeckkappe 6 wird mittels einer Überwurfhülse 8 mit dem Tauchrohr 4 lösbar verbunden, zum Beispiel durch eine Schraubverbindung, bei der das Tauchrohr 4 ein Aussengewinde und die Überwurfhülse 8 ein entsprechendes Innengewinde umfasst. Weitere Ausgestaltungen der Verbindung zwischen Überwurfhülse 8 und Tauchrohr 4 können zum Beispiel eine Klemmverbindung oder andere bekannte lösbare Verbindungen umfassen. Die Überwurfhülse 8 hat mediumsseitig eine Öffnung 9, so dass im Betrieb zumindest das Fenster 7 der Abdeckkappe 6 mit dem Messmedium in Kontakt treten kann.

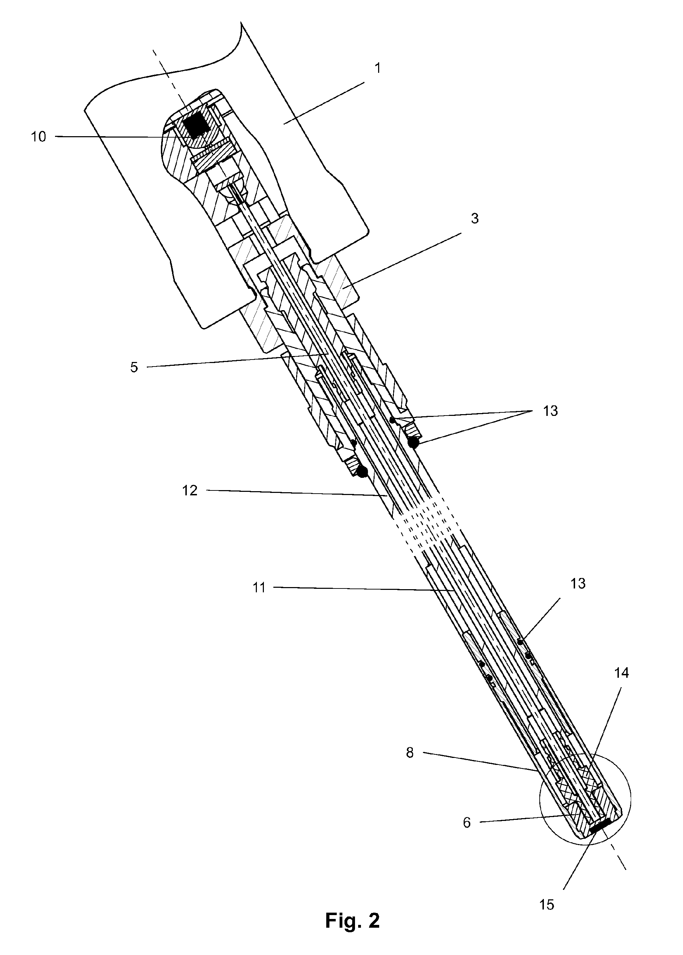

Figur 2 zeigt eine Teildarstellung eines optochemischen Sensors mit einem Sensorkopf 1 und einem Tauchrohr 4 im Schnitt, wobei das Innere des Sensorkopfes 1 nur teilweise sichtbar ist. Im Sensorkopf 1 befindet sich eine Einheit 10, welche zumindest eine Strahlungsquelle und zumindest einen Detektor umfasst. Die Einheit 10 stellt somit einen Teil der Mittel zur Bereitstellung elektronischer und/oder optischer Signale und/oder der Mittel zum Sammeln und/oder Übertragen von Messsignalen dar. Im Falle eines optochemischen Fluoreszenz-Sensors handelt es sich bei der Strahlungsquelle um eine geeignete Lichtquelle mit einer für den verwendeten Fluorophor optimierten Wellenlänge.

Im Inneren des Tauchrohres 4 befindet sich ein Wellenleiter 5, welche von einem Mantel 11 umgeben ist, welcher den Wellenleiter 5 im Gehäuse 12 des Tauchrohrs 4 führt und schützt.

Am mediumsseitigen Ende des Tauchrohres 4 endet der Wellenleiter 5 von einer Führungshülse 14 umgeben in einer Abdeckkappe 6, welche den Wellenleiter 5 und damit das Innere des Tauchrohres 4 gegenüber dem Messmedium abdichtet. Die Abdeckkappe 6 weist in dieser Ausführung ein Fenster mit einer Vertiefung auf, welche einen Träger für ein Messelement 15 darstellt.

Die Abdeckkappe 6 ist mittels einer Überwurfhülse 8 am Gehäuse 12 des Tauchrohrs 4 mediumsdicht befestigt.

Der optochemische Sensor weist mehrere Dichtmittel 13 auf, welche dazu dienen ein Eindringen von Messmedium in das Innere des Sensors zu verhindern.

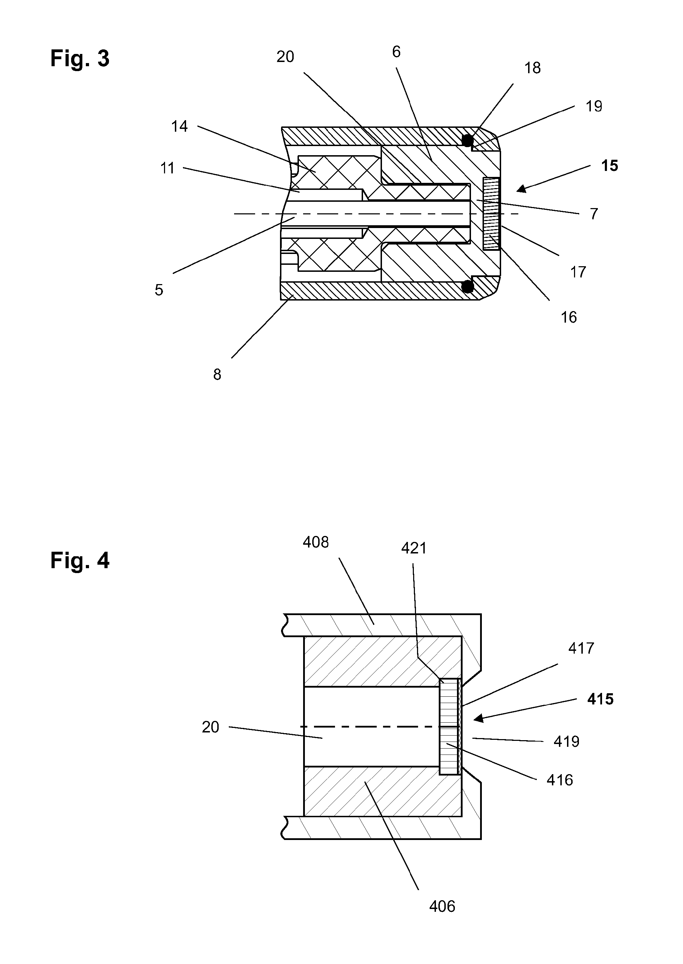

Der im eingezeichneten Kreis liegende Abschnitt des optochemischen Sensors ist in Figur 3 vergrössert dargestellt. Die Überwurfhülse 8 umgreift einen Absatz 19 der Abdeckkappe 6 und fixiert diese. Die Überwurfhülse 8 weist zudem einen Einschnitt für ein Dichtmittel 18 auf, welches ebenfalls zur Fixierung der Abdeckkappe 6 und zudem zur Abdichtung des Inneren des Tauchrohres 4 gegen das Messmedium dient.

Die Abdeckkappe 6 ist im Wesentlichen als Hohlzylinder ausgestaltet, welcher mediumsseitig eine Vertiefung als Träger für das Messelement 15 und den umlaufenden Absatz 19 aufweist. Die Abdeckkappe 6 weist auch an der mediumsabgewandten Seite ein Aussparung oder Öffnung 20 auf, in welcher der Wellenleiter 5 mit der diesen umgebenden Führungshülse 11 angeordnet ist. In diesem Ausführungsbeispiel stellt das Fenster 7 den mediumsseitigen Abschluss der Aussparung 20 dar. Das Messelement 15 besteht hier aus einem Substrat 16 auf das mediumsseitig eine polymere Messschicht 17, welche beispielsweise ein Fluorophor enthält, aufgebracht ist. Die Aufbringung der Messschicht 17 auf das Substrat 16 kann beispielsweise durch Spincoating oder verwandte Verfahren geschehen. Weiterhin kann die Messschicht 17 getrennt hergestellt und zum Beispiel durch Kleben mit dem Substrat 16 verbunden werden.

Die mediumszugewandte und/oder die mediumsabgewandte Seite des Fensters kann eine polierte Oberfläche aufweisen, welche einen höheren Signaldurchsatz und somit eine höhere Messsignalausbeute ermöglicht. Eine unpolierte Oberfläche hat hingegen den Vorteil, dass die Signale stärker gestreut werden, wodurch das Messelement weniger stark belastet wird und eine Alterung des Sensors reduziert werden kann. Die Oberflächengestaltung des Fensters kann somit verändert werden.

Die Figuren 4 bis 9 zeigen weitere Ausgestaltungen der Abdeckkappe und/oder des Messelements.

Figur 4 zeigt eine Abdeckkappe 406, welche hülsenförmig ausgestaltet ist. Im eingebauten Zustand wird die mediumsabgewandte Aussparung 20 durch ein Messelement 415 verschlossen, welches auf einem den Innendurchmesser der Abdeckkappe 406 umlaufenden Absatz 421 aufliegt und vorzugsweise fest mit der Abdeckkappe 406 verbunden ist. Das Messelement 415 besteht wiederum aus einem Substrat 416 auf das mediumsseitig eine polymere Messschicht 417 aufgebracht ist. Vorzugsweise bestehen sowohl das Substrat 416 als auch die Abdeckkappe 406 aus Glas, so dass eine feste Verbindung zwischen der Abdeckkappe 406 und dem Messelement 415 beispielsweise durch Einsatz geeigneter Glaskleber einfach herzustellen ist. In dieser Ausgestaltung wirkt das Substrat 416 als Fenster der Abdeckkappe 406.

Ferner zeigt Figur 4 eine Überwurfhülse 408, welche mediumsseitig nicht nur einen Teil der Abdeckkappe 406 sondern zudem einen Teil des Messelements 415 unter Auslassung einer Öffnung umschliesst. Auf diese Weise kann neben der Abdeckkappe 406 auch das Messmedium 415 gegen ein versehentliches Herausfallen gesichert werden und so eine Kontamination des Messmediums oder eines daraus entstehenden Produkts durch Teile des Messelements verhindert werden.

In weiteren Ausgestaltungen können die Abdeckkappe und/oder das Substrat aus einem für die verwendete Strahlung transparentem Kunststoff oder Polymer bestehen, wie beispielsweise Polycarbonate, Cyclo-Olefin-Copolymere, Polymethylmethacrylate oder Polymethacrylmethylimide.

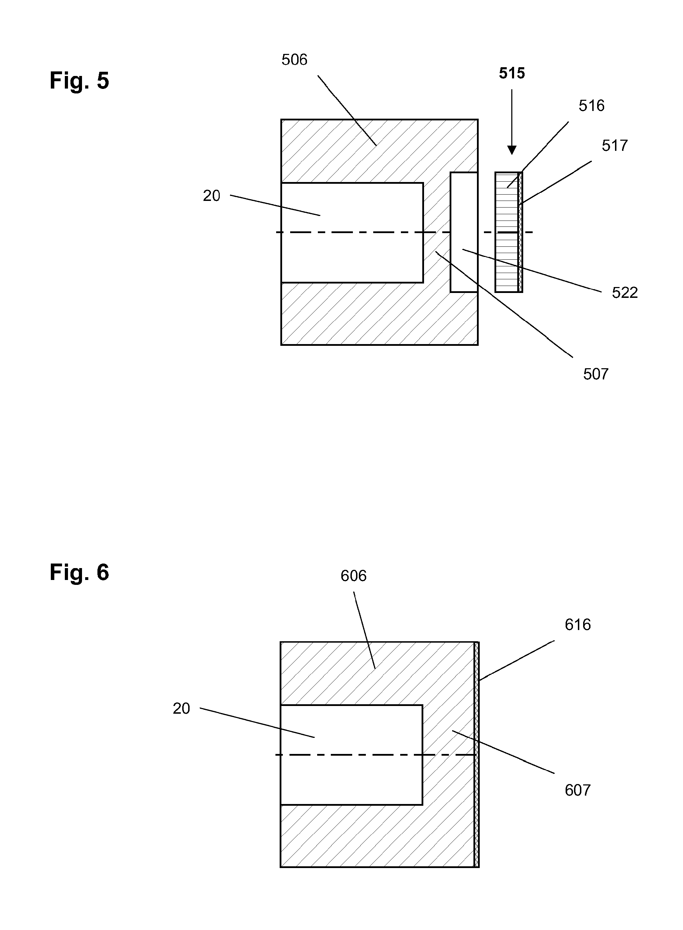

Figur 5 zeigt eine weitere Ausgestaltung einer Abdeckkappe 506 und eines Messelements 515. Das Messelement 515 besteht wiederum aus einem Substrat 516, mit einer darauf aufgebrachten polymeren Messschicht 515, welche ein Fluorophor enthält. Das Messelement 515 kann in eine mediumsseitige Aussparung 522 der Abdeckkappe 506 eingesetzt werden, wobei die Aussparung 522 als Träger für das Messelement 515 wirkt. Der Boden der Aussparung 522 stellt in dieser Ausgestaltung ein Fenster 507 dar, auf welchem das Messelement 515 befestigt wird. Zu Befestigung des Messelements 515 werden vorzugsweise Methoden und Materialien verwendet, welche die Eigenschaften des Messelements 515 und/oder der Abdeckkappe 506 nicht verändern, insbesondere deren Transparenz für die bereitgestellten Signale und die Messsignale.

In der in Figur 6 gezeigten Ausgestaltung einer Abdeckkappe 606 ist eine Messschicht 616 direkt mediumsseitig auf ein Fenster 607 aufgebracht. Diese Ausführung ist vorteilhaft, da so die Abdeckkappe 606 im Wesentlichen einteilig ausgestaltet ist und die Befestigung eines Messelements entfällt, wodurch unter anderem Interferenzen an den Grenzflächen zwischen Messelement und Befestigungsmittel bzw. Befestigungsmittel und Abdeckkappe 606 vermieden werden können. Auch diese Abdeckkappe 606 weist auf der mediumabgewandten Seite eine Aussparung 20 zur Aufnahme eines Wellenleiters auf.

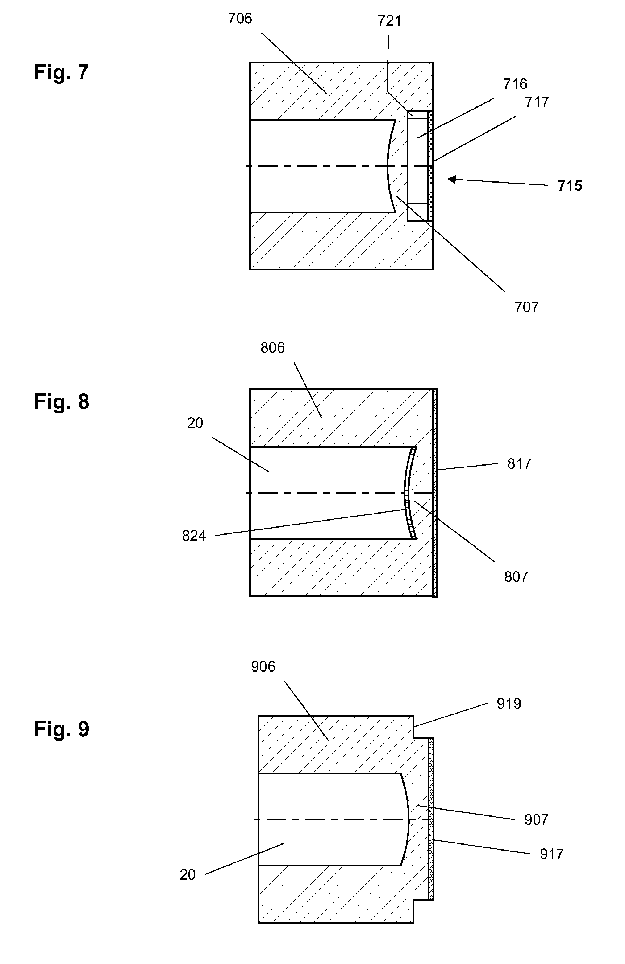

Figur 7 zeigt eine weitere Ausgestaltung einer Abdeckkappe 706 mit einem einseitig konvex ausgestaltetem Fenster 707. Mediumsseitig und leicht beabstandet zum Fenster 707 weist die Abdeckkappe 706 einen den Innendurchmesser umlaufenden Absatz 721 auf, welcher als Träger für ein Messelement 715 dient. Der Abstand zwischen dem einseitig konvex ausgestaltetem Fenster 707 und Messelement 715 sollte so gewählt sein, dass die bereitgestellten Signale auf eine möglichst grosse Fläche einer Messschicht 717 des Messelements aufgeweitet werden und zudem die rückgestreuten Messsignale wiederum auf den im Betrieb in einer Aussparung 20 der Abdeckkappe 706 befindlichen Wellenleiter fokussiert werden. Der Abstand hängt daher von den Eigenschaften dieser Elemente ab.

Figur 8 zeigt als weitere Ausgestaltung eine Abdeckkappe 806 mit einem einseitig konvex ausgestaltetem Fenster 807, wobei die im Betrieb mediumszugewandte Oberfläche oder Seite des Fensters 807 mit einer Messschicht 817 und die mediumsabgewandte Oberfläche mit einer weiteren Beschichtung 824 versehen ist. Als weitere Beschichtung 824 kann beispielsweise eine Beschichtung mit einem Filtereffekt und/oder eine Schutzschicht aufgebracht werden. Auf diese Weise können die Eigenschaften des Fensters 807 optimal auf die Messbedingungen, wie beispielsweise das Messmedium, die Messsignale und/oder die bereitgestellten Signale angepasst werden.

Figur 9 zeigt ebenfalls eine Abdeckkappe 906 mit einem als Linse ausgestalteten Fenster 907, jedoch ist das Fenster 907 hier mediumsabgewandt konvex ausgestaltet und weist mediumsseitig eine Messschicht 917 auf. Zudem weist die Abdeckkappe 906 mediumsseitig an ihrem äusseren Rand einen umlaufenden Absatz 919 auf, welcher als Auflage für eine Überwurfhülse dient. Selbstverständlich könnte die mediumsabgewandte Seite des Fensters konkav ausgestaltet sein. Weiterhin könnten beide Seiten des Fensters konvex oder konkav ausgebildet sein.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere ist es möglich optochemische Sensoren mit Abdeckkappen bereitzustellen, bei welchen die Abdeckkappen verschiedene Kombinationen der in den Figuren dargestellten Eigenschaften aufweisen.

### Bezugszeichenliste

- 1: Sensorkopf
- 2: Anschluss
- 3: Verbindungselement
- 4: Tauchrohr
- 5: Wellenleiter
- 6, 406, 506, 606, 706, 806, 906: Abdeckkappe
- 7, 507, 607, 707, 807, 907: Fenster
- 8, 408: Überwurfhülse
- 9: Öffnung
- 10: Einheit
- 11: Mantel von 5
- 12: Gehäuse von 4
- 13: Dichtmittel
- 14: Führungshülse
- 15, 415, 515, 715: Messelement
- 16, 416, 516, 616, 716: Substrat
- 17, 417, 517, 717, 817, 917: Messschicht
- 18: Dichtmittel
- 19, 919: Absatz
- 20: Aussparung
- 421, 721: Absatz
- 522: Aussparung
- 423: Öffnung
- 824: Beschichtung

## Patentansprüche

1. Optochemischer Sensor zur Messung mindestens eines chemischen oder physikalischen Parameters eines Messmediums, umfassend ein Sensorgehäuse, ein Messelement (15, 415, 515, 715), und eine Messanordnung (10); wobei die Messanordnung (10) im Sensorgehäuse angeordnet ist und Mittel zur Bereitstellung optischer und/oder elektrischer Signale und Mittel zum Sammeln und/oder Übertragen von Messsignalen umfasst; und wobei die Messsignale aus der direkten oder indirekten Wechselwirkung der optischen und/oder elektrischen Signale mit dem Messmedium resultieren; **dadurch gekennzeichnet, dass** der optochemische Sensor ferner eine Abdeckkappe (6, 406, 506, 606, 706, 806, 906) aufweist; wobei die Abdeckkappe (6, 406, 506, 606, 706, 806, 906) die Messanordnung gegen das Messmedium abdichtet und mediumsseitig ein Fenster (7, 507, 607, 707, 807, 907) aufweist; wobei das Messelement (15, 415, 515, 715, 817, 917) mediumsseitig auf dem Fenster (7, 507, 707, 807, 907) angeordnet ist und im Betrieb in direktem Kontakt mit dem Messmedium steht; und wobei die Abdeckkappe (6, 406, 506, 606, 706, 806, 906) und insbesondere das Fenster (7, 507, 607, 707, 807, 907) im Wesentlichen aus einem Material, wie Glas oder einem Kunststoff, welches zumindest für die optischen und/oder elektrischen Signale sowie für die Messsignale durchlässig ist, bestehen.

2. Optochemischer Sensor gemäss Anspruch 1, **dadurch gekennzeichnet, dass** die Abdeckkappe mediumsseitig einen Träger für das Messelement (15, 415, 515, 715) umfasst.

3. Optochemischer Sensor gemäss Anspruch 1 oder 2, **dadurch gekennzeichnet, dass** das Messelement eine vorzugsweise polymere Messschicht (17, 417, 517, 717, 817, 917) mit einem darin gelösten Fluorophor umfasst.

4. Optochemischer Sensor gemäss einem der Ansprüche 1 bis 3, **dadurch gekennzeichnet, dass** die Abdeckkappe (6, 406, 506, 606, 706, 806, 906) einstückig ausgestaltet ist.

5. Optochemischer Sensor gemäss einem der Ansprüche 1 bis 4, **dadurch gekennzeichnet, dass** das das Fenster (707, 807, 907) der Abdeckkappe (706, 806, 906) als Linse ausgestaltet ist

6. Optochemischer Sensor gemäss einem der Ansprüche 1 bis 5, **dadurch gekennzeichnet, dass** das das Fenster (807) der Abdeckkappe (806) als Filter ausgestaltet ist.

7. Optochemischer Sensor gemäss einem der Ansprüche 1 bis 6, **dadurch gekennzeichnet, dass** das das Fenster (607, 807, 907) der Abdeckkappe (606, 806, 906) ein- oder zweiseitig beschichtet ist.

8. Optochemischer Sensor gemäss einem der Ansprüche 1 bis 7, **dadurch gekennzeichnet, dass** die Abdeckkappe (6, 406) austauschbar und mittels einer Überwurfhülse (8, 408) am Sensorgehäuse befestigt ist.

9. Optochemischer Sensor gemäss Anspruch 8, **dadurch gekennzeichnet, dass** die Überwurfhülse (408) an ihrem mediumsseitigen Ende eine Öffnung (423) mit einem umlaufenden Rand aufweist, welcher im Betrieb die Abdeckkappe sichert.

10. Optochemischer Sensor gemäss einem der Ansprüche 8 bis 9, **dadurch gekennzeichnet, dass** dieser ein erstes Dichtmittel (13) umfasst, welches zwischen der Überwurfhülse (8, 408)und dem Gehäuse angeordnet ist.

11. Optochemischer Sensor gemäss einem der Ansprüche 8 bis 10, **dadurch gekennzeichnet, dass** dieser ein zweites Dichtmittel (18) umfasst, welches zwischen der Abdeckkappe und der Überwurfhülse angeordnet ist.

12. Optochemischer Sensor gemäss einem der Ansprüche 1 bis 11, **dadurch gekennzeichnet, dass** das Mittel zur Bereitstellung optischer und/oder elektrischer Signale und/oder Mittel zum Sammeln und/oder Übertragen von Messsignalen (10) mindestes einen Wellenleiter (5) umfasst.
